Europäisches Patentamt

European Patent Office

Office européen des brevets

(11) Numéro de publication: **0 162 482 B1**

(12) **FASCICULE DE BREVET EUROPEEN**

(45) Date de publication de fascicule du brevet:
**29.01.92**

(21) Numéro de dépôt: **85200073.6**

(22) Date de dépôt: **05.09.79**

(51) Int. Cl.⁵: **A47J 37/12**

(60) Numéro de publication de la demande initiale
en application de l'article 76 CBE : **0 008 838**

(54) **Panier ajouré avec poignée.**

(30) Priorité: **13.09.78 BE 870419**

(43) Date de publication de la demande:
**27.11.85 Bulletin 85/48**

(45) Mention de la délivrance du brevet:
**29.01.92 Bulletin 92/05**

(84) Etats contractants désignés:
**CH DE FR GB IT NL SE**

(56) Documents cités:
**FR-A- 801 212**
**FR-A- 1 517 736**
**FR-A- 2 149 708**
**GB-A- 828 267**

(73) Titulaire: **NOVA ELECTRO INTERNATIONAL N.V.**
**Overhaamlaan 44**
**B-3700 Tongeren(BE)**

(72) Inventeur: **Colley, Jacques Louis Joseph**
**rue Naniot 274**
**B-4000 Liege(BE)**
Inventeur: **Vrydags, André Pierre Joseph**
**Haut Neu Bois, 18**
**B-4880 Spa(BE)**

(74) Mandataire: **Vanderperre, Robert et al**
**Bureau Vander Haeghen S.A. Rue Colonel Bourg 108 A**
**B-1040 Bruxelles(BE)**

Rank Xerox (UK) Business Services

## Description

L'invention se rapporte à un panier ajouré avec poignée destiné à être plongé dans le récipient d'un appareil de cuisson, le panier et la poignée étant reliés à un support qui peut être associé temporairement au récipient, des moyens de verrouillage déplaçables empêchant, lorsqu'ils sont opérés, des déplacements relatifs entre le panier, la poignée et le support mais, lorsqu'ils ne sont pas opérés, permettant des mouvements de la poignée pour déplacer le panier à l'intérieur du récipient.

Un tel mécanisme et particulièrement une écumoire pour friteuse a été décrite dans le brevet français No 2149708. Alors qu'un autre système décrit dans le brevet français No 1517736 est destiné à monter et à descendre le panier par rotation d'un bouton de commande fixé à l'extérieur de la friteuse, celui du brevet français No 2149708 permet de rendre la poignée entièrement solidaire du panier. De la sorte, on peut manipuler aisément le panier en dehors de la friteuse sans risque de décrochage entre la poignée et le panier tandis que l'ensemble peut aisément être associé à la friteuse en insérant le support reliant le panier à la poignée dans une coulisse ménagée sur la paroi interne de la cuve. Ensuite, en tenant toujours le manche d'une seule main, le verrou peut être libéré facilement par le pouce de cette main pour abaisser le panier dans la friteuse en laissant le manche se relever, un mouvement inverse de celui-ci relevant le panier pour égoutter les aliments. Dans la position déverrouillée, la poignée peut également être rabattue au-dessus du panier par une rotation de 180°, ce qui facilite le rangement.

Un but de l'invention est de réaliser un assemblage modifié entre le panier, le support, la poignée et la cuve de manière à permettre une manipulation aisée du panier, y compris le secouer lorsque le couvercle de la friteuse est fermé, ceci étant particulièrement souhaitable lorsqu'il est pourvu d'un dispositif filtrant les vapeurs s'échappant à l'extérieur lors de la cuisson et d'un hublot permettant d'observer celle-ci.

Suivant une première caractéristique de l'invention, les rebords du récipient et d'un couvercle lorsqu'ils reposent sur le récipient ne sont pas contigus sur toute leur périphérie mais forment une ouverture destinée à recevoir le support lorsque, le couvercle étant levé, le panier est inséré dans le récipient, le support obturant alors l'ouverture étant lui-même pourvu d'au moins une ouverture de passage occupée par un organe de liaison mobile permettant de déplacer le panier suite au mouvement de la poignée.

Suivant une deuxième caractéristique de l'invention, l'ouverture de passage du support permet audit organe de coulisser à travers le support lorsque la poignée est déplacée pour mouvoir le panier.

Suivant une troisième caractéristique de l'invention, le panier pivote d'un côté du support et la poignée de l'autre côté, de telle sorte que le poids du panier tire l'organe à l'intérieur du récipient, entraînant la poignée dans une position où elle pend le long de la paroi extérieure du récipient.

Suivant une quatrième caractéristique de l'invention, la poignée a une extrémité en forme de nez se pressant contre la surface extérieure du support, de telle sorte que lorsque la poignée est relevée vers l'horizontale hors de sa position pendante, un pivot entre la poignée et ledit organe est écarté du support, tirant l'organe et soulevant le panier dans le récipient.

De la sorte, en conservant les avantages du dispositif du brevet français No 2149708, on peut aisément fermer la couvercle après l'insertion du support dans une encoche pratiquée au bord supérieur de la marmite et les vapeurs continueront à s'échapper essentiellement à travers le dispositif de filtrage. Une telle poignée permet de secouer le panier en posant la main sur le couvercle fermé, principalement pour éviter un déplacement de la friteuse, le support pouvant être engagé dans l'encoche avec une friction adéquate. En outre, il n'est plus nécessaire de prévoir une coulisse rivée à l'intérieur de la cuve et destinée à l'ancrage du support, ce qui facilite le nettoyage. L'usage d'un manche allongé convient particulièrement bien pour déplacer facilement le panier même lorsque le couvercle est fermé et que l'on observe la cuisson des aliments à travers le hublot, notamment afin de secouer le panier.

On peut encore remarquer qu'il est déjà connu des brevets britannique No 828267 et français No 801212 de pratiquer des encoches ou des ouvertures dans le bord supérieur d'une marmite mais celles-ci ne sont pas destinées à permettre le logement d'un support obturant l'ouverture afin de permettre à une poignée articulée sur le panier de déplacer ce dernier.

Les buts et caractéristiques de l'invention mentionnés ci-dessus ainsi que d'autres et la meilleure manière de les obtenir seront mieux compris de la description qui fait suite d'une réalisation détaillée de l'invention devant être lue en conjonction avec les dessins qui l'accompagnant et dans lesquels :

La Fig. 1 représente une vue éclatée des éléments constitutifs du dispositif à poignée allongée pour le panier y compris les bielles portant ce dernier;

La Fig. 2 représente une vue en plan de la partie femelle constituant une demi-poignée;

La Fig. 3 représente une vue schématique en coupe d'une friteuse dont le couvercle est fermé et montrant le fonctionnement de la poignée allongée suivant l'invention pour déplacer verticalement le panier qui lui est associé;

La Fig. 4 représente une vue en perspective montant la liaison entre les bielles portant le panier et la poignée allongée; et

La Fig. 5 représente une vue en perspective de cas mêmes éléments mais vus de l'extérieur de la friteuse et an montrant le rebord supérieur de celle-ci à l'endroit de fixation du support de la poignée allongée du panier.

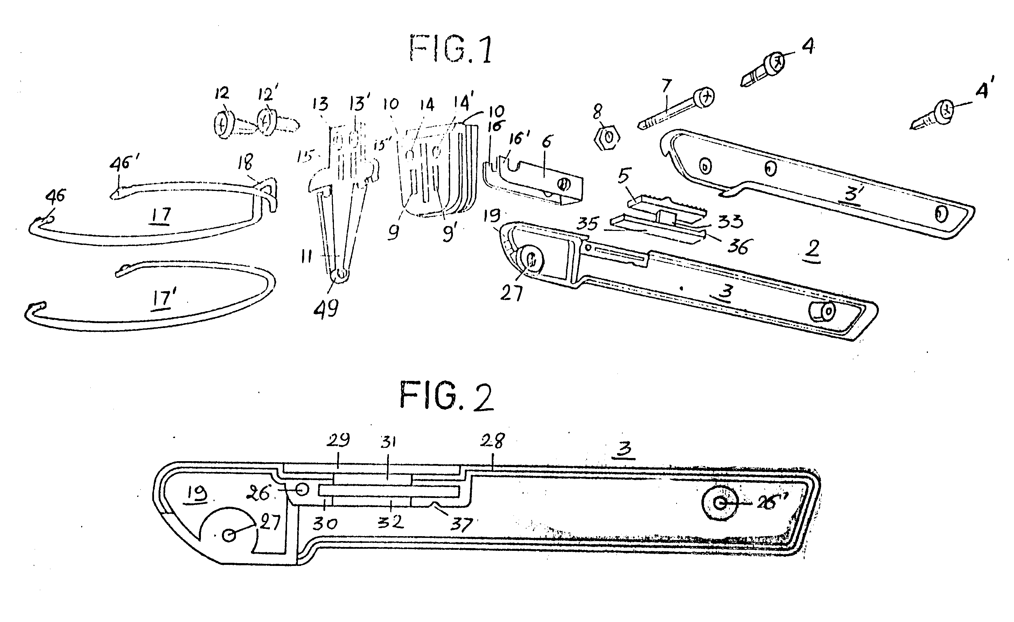

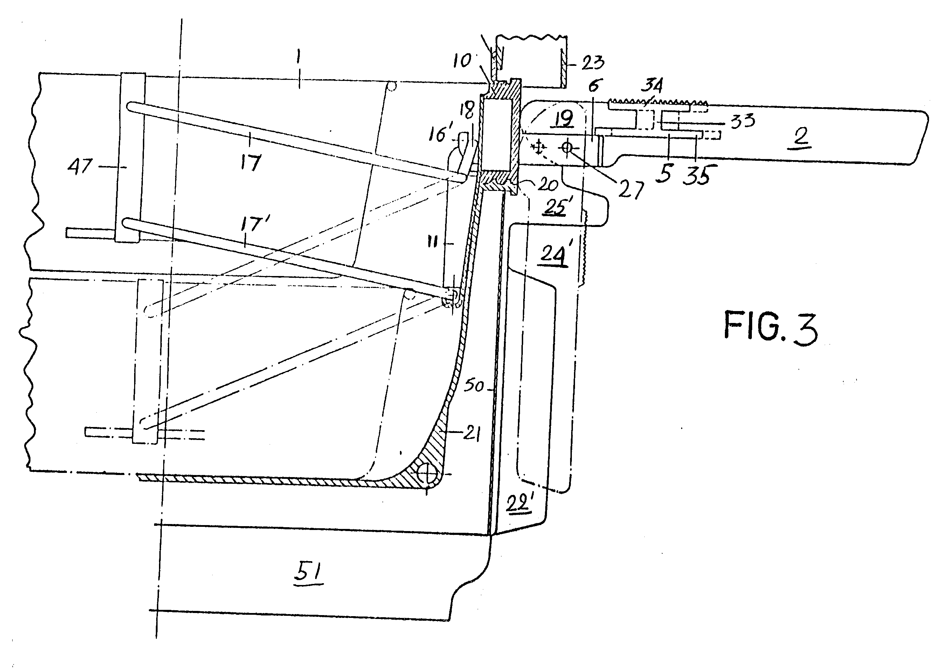

Ce panier 1 en treillis de la friteuse et qui est représenté schématiquement et partiellement aux Figs. 3 et 5 est associé à une poignée en forme de manche allongé 2 apparaissant sur la vue éclatée de la Fig. 1.

Cette figure indique qu'elle est essentiellement constituée par deux demi-poignées mâle 3' et femelle 3 dont la seconde est représentée en plus de détails à la Fig. 2. Ces deux demi-poignées 3 et 3' agissent, lorsqu' elles sont assemblées l'une à l'autre à l'aide des vis 4 et 4' , comme une coquille emprisonnant d'une part l'organe de verrouillage 5 et l'élément de liaison 6 en forme de U. Cet élément de liaison est monté sur le pivot fileté 7 fixé à travers les demi-poignées 3 et 3' à l'aide de l'écrou 8 . Les deux branches latérales du U sont insérées dans des ouvertures 9 et 9' pratiquées à travers le support 10 en plastique comme les demi-poignées 3 et 3' , l'élément de liaison 6 étant par contre en métal. Un autre élément métallique 11 servant à la fixation du panier 1 (Fig. 3) est rendu solidaire de la face représentée du support 10 (Fig. 1) à l'aide de vis 12 et 12' passant à travers les trous 13 et 13' pour se visser dans les trous filetés 14 et 14' du support 10. Le support métallique 11 est également pourvu de deux ouvertures verticales allongées 15 et 15' s'alignant sur les ouvertures correspondantes 9 et 9' du support en plastique 10 afin de permettre le passage des extrémités 16 et 16' en forme de crochet des branches latérales du U formant l'organe de liaison métallique 6 .

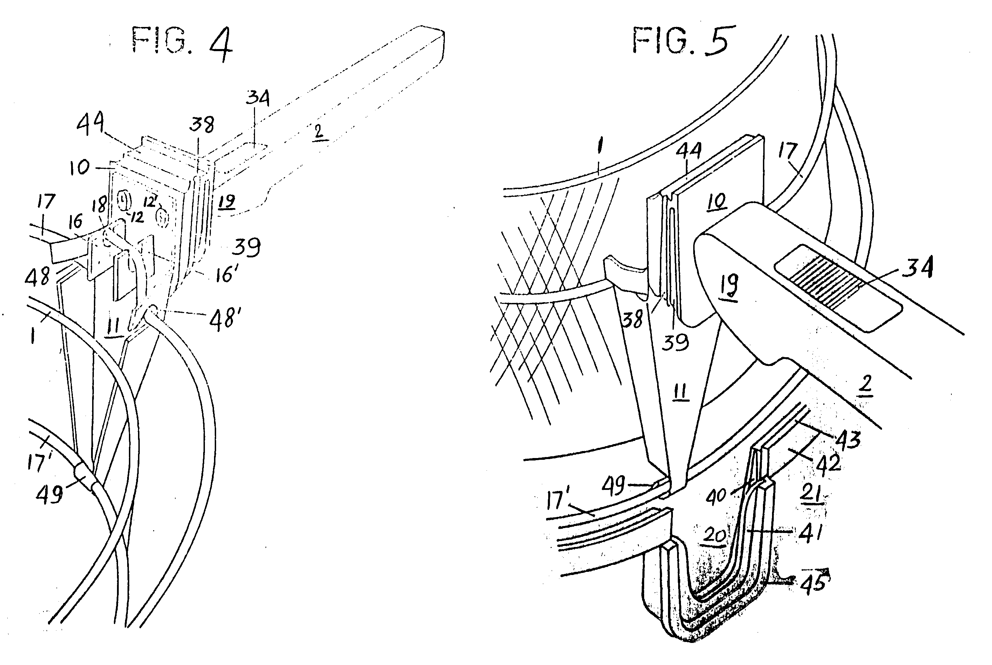

Comme on le voit également aux Figs. 3 et 4, ces extrémités en forme de crochet 16 et 16' permettant d'accrocher la bielle supérieure 17 du panier 1 et plus particulièrement son archet central 18.

De cette manière, comme le montre la vue latérale partiellement en coupe de la Fig. 3' à une position horizontale de la poignée 2 correspond en état relevé pour le panier 1 . Cette position est obtenue par le pivotement vers le haut des bielles 17 et 17' du panier suite à la traction exercée par les extrémités 16 et 16' en forme de crochet de l'organe de liaison 6 , l'extrémité en forme de nez 19 de la poignée 2 étant poussée contre la face extérieure du support en plastique 10 qui comme l'indique les Figs. 3 et 5 peut être glissé dans une encoche 20 pratiquée dans la rebord supérieur de la cuve 21.

Le panier 1 peut être maintenu dans cette position supérieure et la poignée 2 rendue intégralement solidaire du panier an poussant l'organe de verrouillage 5 dans la direction de la cuve 21, position montrée en traits pleins à la Fig. 3.

Par contre, après déverrouillage lorsqu'on laisse retomber la poignée allongée 2 verticalement le long de la paroi extérieure de la friteuse, le panier 1 peut reposer sur le fond de celle-ci. Ceci est indiqué partiellement à la Fig. 3, des traits interrompus étant utilisés pour cette position de la poignée 2 , une partie du panier 1 et des bielles 17 et 17'. Comme indiqué, dans cette position verticale de la poignée 2 , elle retombe dans une encoche verticale centrale (non montrée) pratiquée dans le montant en plastique 22' diamétralement opposé au montant au sommet duquel est disposée la charnière pour le dessus de couvercle 23. Outre cette encoche verticale permettant de rabattre la poignée 2 contre la friteuse, un renfoncement rectangulaire horizontal 24' est également pratiqué sur la plus grande largeur du montant 22' en dessous de la prise 25' permettant de soulever la friteuse, des parties correspondant à 24' et 25' existant également de façon symétrique pour le montant opposé du côté de la charnière de la friteuse. Naturellement, la prise manuelle 25' est interrompue dans sa partie médiane pour permettre le passage de la poignée 2 de telle sorte qu'il y a en fait deux prises de chaque côté de l'encoche 20 (Fig. 5) prévue dans le rebord supérieur de la friteuse.

Les deux demi-coquilles 3 et 3' (Fig. 1) constituant la poignée 2 sont sensiblement identiques et la demi-poignée femelle 3 est détaillée à la Fig. 2. Outre les logements 26 et 26' (Fig. 2) destinés aux vis 4 et 4' , ainsi que le trou 27 permettant le passage du pivot fileté 7 fixé par l'écrou 8 , par l'assemblage des demi-poignées en enserrant le bouton de verrouillage 5 et l'élément de liaison 6 en U , chaque demi-coquille telle que 3 pour la demi-poignée femelle (Fig. 2) comporte un rebord 28 faisant tout le tour de la poignée à l'exception d'une interruption au niveau du nez 19. Naturellement, les rebords des demi-poignées mâle et femelle sont complémentaires, pour pouvoir s'imbriquer l'un dans l'autre. En outre, les deux demi-poignées possèdent un renfoncement tel que 29 et immédiatement en -dessous de celui-ci une extension allongée, généralement rectangulaire 30 dont les deux bras parallèles à la poignée sont moins larges en 31 et 32 de manière à pouvoir loger la partie centrale 33 du bouton de verrouillage 5 (Figs. 1 et 3). Comme montré, ce bouton de verrouillage 5 possède une partie supérieure 34 striée pouvant être manoeuvrée par le pouce de la main tenant la poignée 2 et une partie inférieure 35 plus longue. Les deux demi-poignées telles que 3 pourront donc être assemblées l'une à l'autre en enserrant notamment le verrou de blocage 5 entre les deux demi-coquilles, de manière à ce que la partie horizontale 34 puisse glisser dans les logements supérieurs 95 des deux demi-poignées et mis côte à côte, tandis que la partie horizontale inférieure 35 glisse en dessous des extensions telles que 30, l'élément central 33 pouvant se déplacer dans la cavité formée par les gorges horizontales telles que 31 et 32.

L'assemblage des deux demi-poignées telles que 3 se fera également en montant l'organe de liaison 6 en U sur le pivot 7 de manière à ce que les extrémités des deux branches du U en forme de crochet 16 et 16' puissent passer à travers le bas du nez 19, le rebord 28 étant ouvert à cet endroit comme précédemment indiqué. Comme on le voit particulièrement aux Figs. 3 et 4 , ces deux extrémités crochues traversent également en 9 et 9' (Fig. 1) le support en plastique 10 dont le support métallique 11 destiné à manoeuvrer les bielles 17 et 17' du panier 1 est solidaire.

Pour la position horizontale de la poignée 2 montrée en traits pleins à la Fig. 3, le panier 1 est dans la position haute lorsque le support en plastique 10 a été inséré dans l'encoche 20 (Fig. 5) pratiqué dans le rebord supérieur de la friteuse. Pour cette position horizontale de la poignée 2 , le bouton de verrouillage 5 peut être déplacé en direction de la friteuse pour occuper la position montrée en traits pleins à la Fig. 3 et pour laquelle l'extrémité gauche de la partie inférieure 35 de ce bouton de verrouillage 5 repose au-dessus de la partie centrale de l'organe de liaison 6 en forme de U ce qui empêche tout pivotement de la poignée par rapport à cet organe et au support en plastique 10. Le verrouillage est garanti par une protubérance supérieure 36 (Fig. 1) à l'extrémité droite de la partie 35 et qui vient s'accrocher dans l'encoche 37 (Fig. 2) pratiquée en dessous de l'extension 30, un jeu suffisant permettant un décrochage lorsque le bouton 5 est repoussé vers l'arrière. De la sorte, la position de verrouillage correspond à un manche fermement fixé au panier qui peut ainsi être manipulé sans difficultés en dehors de la friteuse.

La Fig. 5 indique que l'encoche 20 dans le rebord supérieur de la cuve 21 est disposée sous forme d'un labyrinthe afin d'assurer l'étanchéité de même qu'une fixation mécanique adéquate du panier et de son manche sur la friteuse, ce dernier point étant particulièrement souhaitable en tenant compte de la possibilité de secouer le panier lorsque le couvercle est fermé. Le support en plastique 10 comprend deux gorges parallèles 38 et 39 qui s'étendent sur le pourtour de la pièce à l'exception de sa face supérieure. Ces gorges parallèles 38 et 39 sont destinées à entourer des nervures correspondantes 40 et 41 et disposées dans l'encoche 20. Alors que la nervure extérieure 41 est également en forme de U, se trouve dans le prolongement de la face extérieure du rebord supérieur 42 de la cuve 21 et qu'elle n'atteint pas la face horizontale supérieure 43 de ce rebord, la nervure intérieure 40 monte jusqu'à la face supérieure de la cuve à l'intérieur du rebord 43. Il en résulte que la gorge 39 est interrompue avant d'arriver à la face supérieure 44 du support en plastique 10 tandis que par contre, la gorge intérieure 38 se prolonge jusqu'à cette surface qui assure la continuité avec le bord supérieur de la cuve 21. Il s'ensuit que le support en plastique 10 qui vient également s'enchasser dans le rebord 45 de la cuve en aluminium 21 et entourant l'encoche 20 est fermement fixé sur la cuve malgré la hauteur relativement faible du support 10 et qui offre l'avantage de ne pas diminuer la hauteur effective de la friture, le bain ne pouvant de toute manière dépasser une certaine hauteur. D'autre part, ce joint en labyrinthe assure également une bonne étanchéité pour les fumées et il n'est pas essentiel que la nervure 40 s'étende sur un parcours en U comme la nervure 41 , deux nervures verticales étant adéquates.

Lorsque le panier 1 , solidaire du manche 2 est ainsi mis en place (Fig. 3), en retirant le bouton de verrouillage 5 vers l'arrière, le poids du panier 1 auquel sont reliées les bielles 17 et 17' dont les extrémités recourbées en crochets telles que 46 et 46' pour la bielle supérieure 17 sont insérées par élasticité dans des trous correspondants pratiquée dans les montants tels que 47 solidaires du panier 1 , vont entraîner la retombée de la poignée 2 dans la position verticale montrée en traits interrompus à la Fig. 3. En effet, le poids du panier 1 va faire pivoter la bielle supérieure 17 autour des encoches 48 et 48' (Fig. 4) obtenues par pliage du support métallique 11. L'archet 18 de cette bielle va pivoter en direction du centre de la friteuse et entraîner l'élément de liaison 6 par ses crochets 16 et 16' ce qui va permettra à la poignée 2 de prendre la position verticale montrée en traits interrompus à la Fig. 3, la conformation du nez 19 lui permettant ce pivotement de 90 degrés et ce rapprochement de la surface extérieure de la friteuse. En effet, l'axe de rotation correspondant au trou 27 est décalé par rapport au centre du rayon de courbure du nez et comme montré pour la position verticale de la poignée 2 , il va se déplacer vers la friteuse. La bielle inférieure 17' peut pivoter dans un rebord 49 du support métallique 11 et permet au panier 1 de conserver une position sensiblement horizontale pendant ces mouvements verticaux.

Les montants verticaux en plastique du côté de la charnière et 22' (Fig. 3) du côté de la poignée 2 sont chacun fixés par deux vis (non montrées) dans le renfoncement tel que 24' pour le montant 22' dans lequel se loge la poignée 2 en position verticale. Les parties internes de ces montants se conforment à la surface cylindrique de la tôle 50 constituant l'habillage extérieur de la friteuse autour de la cuve 21 et ces montants verticaux sont pourvus à leur parties inférieures, à la hauteur du fond en plastique 51 de la friteuse (Fig. 3) d'une prolongation horizontale (non montrée) vers l'intérieur de la friteuse suivie d'un rebord vertical en arc de cercle et dirigé vers le bas qui peut s'accrocher à l'intérieur du bord circulaire du fond en plastique 51 , ce dernier portant un rebord circulaire dirigé vers le haut (non montré), interrompu sur les arcs de cercle correspondant aux montants verticaux tel que 22', et venant se loger à l'intérieur de la tôle cylindrique 50. Finalement, un boulon (non montré) sur la face inférieure du fond en plastique 51 et au centre de celle-ci assure la fixation de ce fond, et par là complète celle des montants tels que 22' en venant ainsi solidariser ce fond 51 sur la cuve 21.

Différentes modifications et variantes de l'invention sont évidemment possibles. Si le mouvement de la poignée du panier autour d'un axe transversal passant par une extrémité permet une prise naturelle ainsi qu'une construction relativement simple, une rotation d'un tel manche autour de son axe longitudinal pourrait aussi convenir en utilisant un bec d'accrochage pour le panier de forme appropriée. L'élément traversant le support montré dans l'encoche pratiquée dans le bord supérieur de la friteuse serait cette fois cylindrique et tournerait autour de son axe dans une cavité correspondante au lieu de coulisser en avant et en arrière. Il communiquerait ainsi au bec d'accrochage la rotation de la poignée autour de son axe afin de relever et d'abaisser l'archet de la bielle supérieure reliée au panier.

## Revendications

1. Panier ajouré (1) avec poignée (2) destiné à être plongé dans le récipient (21) d'un appareil de cuisson, le panier et la poignée étant relié à un support (10) qui peut être associé temporairement au récipient, des moyens de verrouillage (34) déplaçables empêchant, lorsqu'ils sont opérés, des déplacements relatifs entre le panier, la poignée et le support mais, lorsqu'ils ne sont pas opérés, permettant des mouvements de la poignée pour déplacer le panier à l'intérieur du récipient, caractérisé en ce que les rebords du récipient et d'un couvercle (23), lorsqu'il repose sur le récipient, ne sont pas contigus sur toute leur périphérie mais forment une ouverture (20) destiné à recevoir le support (10) lorsque, le couvercle étant levé, le panier est inséré dans le récipient, le support obturant alors l'ouverture et étant lui-même pourvu d'au moins une ouverture de passage (9/9') occupée par un organe de liaison mobile (6) permettant de déplacer le panier suite au mouvement de la poignée.

2. Panier ajouré (1) avec poignée (2) selon 1, caractérisé en ce que l'ouverture de passage (9/9') du support (10) permet audit organe (6) de coulisser à travers le support lorsque la poignée est déplacée pour mouvoir le panier.

3. Panier ajouré (1) avec poignée (2) selon 2, caractérisé en ce que le panier pivote d'un côté du support (10) et la poignée de l'autre côté, de telle sorte que le poids du panier tire ledit organe (6) à l'intérieur du récipient (21) entraînant la poignée dans une position où elle pend le long de la paroi extérieure du récipient.

4. Panier ajouré (1) avec poignée (2) selon 3, caractérisé en ce que le poignée à une extrémité en forme de nez (19) se pressant contre la surface extérieure du support (10), de telle sorte que lorsque la poignée (2) est relevée vers l'horizontale hors de sa position pendante, un pivot (7) entre la poignée et le dit organe (6) est écarté du support, tirant l'organe et soulevant le panier (1) dans le récipient (21).

5. Panier ajouré (1) avec poignée (2) selon 2, caractérisé en ce que ledit organe (6) est en forme de U, les deux branches du U coulissant dans les ouvertures (9/9') dudit support et étant pourvues d'échancrures transversales proches de leurs extrémités dans lesquelles une bielle (17) pivotant sur ledit panier (1) est accrochée, la position relevée de la poignée (2) correspondant à la bielle se trouvant contre la face interne du support.

6. Panier ajouré (1) avec poignée (2) selon 5, caractérisé en ce qu'un support de panier (11) est fixé au premier support (10), les dits extrémités échancrées (16/16') de l'organe en forme de U (6) étant entourées par deux ailes échancrées du support de panier, un archet (18) de ladite bielle (17) s'insérant entre les deux ailes dont les échancrures (48/48') servent de pivot pour les mouvements de ladite bielle.

7. Panier ajouré (1) avec poignée (2) selon 1, caractérisé en ce que ledit support (10) comprend deux gorges adjacentes parallèles (38, 39) autour de sa périphérie en contact avec celle de ladite ouverture (20) qui est pourvue de nervures (40, 41) insérées dans lesdites gorges.

8. Panier ajouré (1) avec poignée (2) selon 4 et 5, caractérisé en ce que la poignée (2) comprend deux demicoquilles allongées sensiblement identiques (3/3'), chacune avec une cavité allongée dans laquelle peut coulisser un élément (35) des dits moyens de verrouillage (32) pour empêcher la poignée de pivoter autour dudit support en forme de U et chacune avec une ouverture dans ladite extrémité en forme de nez, les moyens de verrouillage et le support en forme de U étant emprisonnés dans la poignée lorsque les deux demi-coquilles sont assemblées, les moyens de fixation comprenant un pivot (7) pour le support en forme de U dont les branches émergent hors de l'ouverture dans l'extrémité en forme de nez.

## Claims

1. Openwork basket (1) with handle (2) intended to be lowered in the vessel (21) of a cooking appliance, the basket and the handle being bound to a support (10) which may be temporary connected to the vessel, displaceable locking means (34) preventing, when they are operated, relative displacements between the basket, the handle and the support but, when they are not operated, enabling movements of the handle to displace the basket inside the vessel, characterized in that the rims of a vessel and of a cover (23), when the latter closes the vessel, are not contiguous along their periphery, but forms an opening (20) intended to receive support (10) when, the cover being opened, the basket is placed into the vessel, the support closing then the opening and having at least one passage opening (9/9') occupied by a movable link (6) enabling the displacement of the basket due to the movement of the handle.

2. Openwork basket (1) with handle (2) according to 1, characterized in that the passage opening (9/9') of the support (10) enables said link (6) to slide through the support when the handle is displaced for moving the basket.

3. Openwork basket (1) with handle (2) according to 2, characterized in that the basket pivots on one side of the support (10) and the handle pivotes on the other side, so that the weight of the basket pulls said link (6) inside the vessel (21) so as to move the handle into a position in which it hangs along the outer wall of the vessel.

4. Openwork basket (1) with handle (2) according to 3, characterized in that the handle has a nose shaped end (19) which is pushed against the outer wall of the support (10), so that, when the handle (2) is moved towards the horizontal from its hanging position, a pivot (7) between the handle and said link (6) is moved from the support, pulling the link and raising the basket (1) in the vessel (21).

5. Openwork basket (1) with handle (2) according to 2, characterized in that said link (6) is U shaped, the two legs of the U sliding in the openings (9/9') of said support and being provided with cross slots near their ends, in which a rod (17) pivoting on said basket (1) is placed, the upper position of the handle (2) corresponding to the position in which the rod is against the inner side of the support.

6. Openwork basket (1) with handle (2) according to 5, characterized in that a basket support (11) is attached to the first support (10), said slot ends (16/16') of the U shaped link (6) being surrounded by two aisles provided with slots of the basket support, a bow (18) of said rod (17) being placed between said two aisles, the slots (48/48') of which acting as pivot for the movements of said rod.

7. Openwork basket (1) with handle (2) according to 1, characterized in that said support (10) comprises two adjacent and parallel grooves (38, 39) along its periphery which is in contact with that of said opening (20), the latter being provided of ribs inserted into said grooves.

8. Openwork basket (1) with handle (2) according to 4 and 5, characterized in that the handle (2) comprises two elongated half shells (3/3') which are substantially identical, each having an opening at said nose shaped end and an elongated hollow in which an element (35) of the locking means (32) may slide so as to avoid the handle to pivot around said U shaped support, the locking means and the U shaped support being lodged into the handle when the two half shells are put together, the fixing means comprising a pivot (7) for the U shaped support, the legs of which emerge out of the opening of the nose shaped end.

## Patentansprüche

1. Lochkorb (1) mit Griff (2) zum Eintauchen in den Behälter (21) eines Kochgerätes, wobei der Korb und der Griff an einem Träger (10) befestigt sind, der vorübergehend mit dem Behälter kombiniert werden kann, wobei verschiebbare Verriegelungsmittel (34) während des Betriebes Relativbewegungen zwischen dem Korb, dem Griff und dem Träger verhindern, außer Betrieb aber Bewegungen des Griffs zwecks Verschiebens des Korbes im Inneren des Behälters zulassen, dadurch gekennzeichnet, daß die Ränder des Behälters und eines Deckels (23), wenn dieser auf dem Behälter ruht, nicht über ihren gesamten Umfang aneinanderstoßen, sondern eine Öffnung (20) zur Aufnahme des Trägers (10) bilden, wenn der Korb bei gehobenem Deckel in den Behälter eingesetzt ist, wobei der Träger dann die Öffnung verschließt und selbst mit mindestens einer Durchtrittsöffnung (9/9') versehen ist, die mit einem beweglichen Verbindungsglied (6) besetzt ist, welches die Verschiebung des Korbes infolge einer Bewegung des Griffs gestattet.

2. Lochkorb (1) mit Griff (2) nach Anspruch 1, dadurch gekennzeichnet, daß die Durchtrittsöffnung (9/9') des Trägers (10) das Glied (6) durch den Träger gleiten läßt, wenn der Griff zwecks Bewegens des Korbes verschoben wird.

3. Lochkorb (1) mit Griff (2) nach Anspruch 2, dadurch gekennzeichnet, daß der Korb auf der einen Seite des Trägers (10) und der Griff auf der anderen Seite derart schwenkbar sind, daß das Glied (6) durch das Gewicht des Korbes in das Innere des Behälters (21) gezogen wird, wodurch der Griff in eine Position mitgenommen wird, in welcher er entlang der Außenwand des Behälters hängt.

4. Lochkorb (1) mit Griff (2) nach Anspruch 3, dadurch gekennzeichnet, daß der Griff ein Ende in Nasenform (19) hat, welches an die Außenfläche des Trägers (10) gepreßt ist, sodaß bei Hochheben des Griffs (2) zur Horizontalen aus seiner hängenden Position ein Zapfen (7) zwischen dem Griff und dem Organ (6) vom Träger entfernt wird, welcher das Organ an sich zieht und den Korb (1) in den Behälter (21) hebt.

5. Lochkorb (1) mit Griff (2) nach Anspruch 2, dadurch gekennzeichnet, daß das Organ (6) die Form eines U hat, wobei die beiden Schenkel des U in den Öffnungen (9/9') des Trägers gleiten und nahe ihren Enden mit Querausnehmungen versehen sind, in denen eine am Korb (1) schwenkbare Stange (17) eingehängt ist, wobei die angehobene Position des Griffs (2) der an der Innenfläche des Trägers befindlichen Stange entspricht.

6. Lochkorb (1) mit Griff (2) nach Anspruch 5, dadurch gekennzeichnet, daß ein Korbträger (11) am ersten Träger (10) befestigt ist, wobei die mit Ausnehmungen versehenen Enden (16/16') des U-förmigen Organs (6) von zwei mit Ausnehmungen versehenen Flügeln des Korbträgers umgeben sind und ein Bügel (18) der Stange (17) zwischen den beiden Flügeln eingeschoben ist, deren Ausnehmungen (48/48') als Drehstelle für die Bewegungen der Stange dienen.

7. Lochkorb (1) mit Griff (2) nach Anspruch 1, dadurch gekennzeichnet, daß der Träger (10) zwei parallele, nebeneinanderliegende Nuten (38, 39) um seinen Umfang aufweist, welcher in Kontakt mit jenem der Öffnung (20) steht, der mit in den Nuten eingesetzten Rippen (40, 41) versehen ist.

8. Lochkorb (1) mit Griff (2) nach Anspruch 4 und 5, dadurch gekennzeichnet, daß der Griff (2) zwei im wesentlichen identische längliche Halbschalen (3/3') umfaßt, u.zw. jede mit einem länglichen Hohlraum, in dem ein Element (35) der Verriegelungsmittel (32) gleitbeweglich ist, um zu verhindern, daß der Griff um den U-förmigen Träger schwenkt, und jede mit einer Öffnung, in welcher das nasenförmige Ende, die Verriegelungsmittel und der U-förmige Träger im Griff festgehalten sind, wenn die beiden Halbschalen aneinandergefügt sind, wobei die Befestigungsmittel einen Zapfen (7) für den U-förmigen Träger umfassen, dessen Schenkel aus der Öffnung im nasenförmigen Ende herausragen.

FIG.1

FIG.2

FIG.3

FIG. 5

FIG. 4